# EUROPEAN PATENT APPLICATION

(11) **EP 4 793 817 A1**
(43) Date of publication of application: **19.08.2026**
(21) Application number: 26157479.2
(22) Date of filing: 10.02.2026
(51) Int. Cl.: G06F 40/30, G06N 3/0475

(54) **SYSTEMS AND METHODS FOR GENERATING RELEVANT LANGUAGE MODEL OUTPUTS BY REDUCING RELIANCE ON MEMORY**

(30) Priority: 14.02.2025 US 202519054764
(71) Applicant: Capital One Services, LLC, McLean, Virginia 22102 (US)
(72) Inventor: TANSKI, Peter, McLean, VA 22102 (US); DAS, Anirban, McLean, VA 22102 (US); ZHU, Chenyang, McLean, VA 22102 (US); DATLA, Vivek, McLean, VA 22102 (US)
(74) Representative: Boult Wade Tennant LLP

(57) **Abstract**

A device may receive an input indicating a prompt for a language model. The device may determine, using the language model, an output responsive to the prompt. The device may determine a degree by which the output relies on memory of the language model. The device may output, responsive to the degree by which the output relies on memory indicating an over-reliance on memory, a modified output that differs from the output.

## Description

### BACKGROUND

In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review as the process by which the results are made may be unknown or obscured. This obscurity can create hurdles for identifying errors in the results, as well as improving the models providing the results. These technical problems may present an inherent problem with attempting to use an artificial intelligence-based solution in achieving highly relevant language model outputs.

### SUMMARY

Methods and systems are described herein for novel uses and/or improvements to artificial intelligence applications. As one example, methods and systems are described herein for improving the accuracy of an output generated by a language model to achieve greater relevance to a corresponding input prompt.

Existing systems are susceptible to model hallucinations and other "guessing" that result in outputs that are inaccurate or otherwise lack relevance to prompts inputted to the language model. For example, existing systems may allow the language model to over-rely on its memory (e.g., information stored in the model based on training data) and insufficiently rely on input prompts, resulting in inaccurate or irrelevant outputs from the language model. As an example, if an input prompt to a chatbot requests a customer service telephone number to call for assistance in creating a new account, the output of the chatbot may instead provide a customer service telephone number to call for website technical assistance due to the chatbot over-relying on memory and insufficiently using the input prompt. However, the difficulty in adapting a language model to achieve greater accuracy faces several technical challenges, such as the inability to deconstruct the language model's decision-making processes and the inability to quantify an amount of memory that the language model relies on in producing an output (as not all hallucinations are a result of reliance on memory).

To overcome these technical deficiencies in adapting artificial intelligence models for this practical benefit, methods and systems disclosed herein enable language model outputs with reduced reliance on memory, thereby improving the accuracy and reliability of the outputs. For example, the system improves the accuracy and reliability of the outputs by determining a degree by which an output of a language model relies on memory of the language model rather than relying on an input prompt. For example, the system can reduce a language model's reliance on memory to improve the accuracy and reliability of its outputs by balancing input prompt dependency and memory reference in a controlled way. To do so, the system may generate a "perplexity value," which quantifies the extent to which an output is based on prior interactions (memory) rather than the current prompt. To do this, the system could assess the input context and flag when the model references memory versus when it generates responses directly from the prompt. This assessment may involve weighting recent input contexts more heavily than previous interactions, ensuring the model's output is more grounded in the immediate request. Additionally, the system may use thresholding to dynamically adjust how much memory is incorporated based on factors like response relevance or user preference for prompt-based responses. With these controls in place, the system can selectively reduce memory dependence, allowing the language model to produce more accurate, contextually relevant responses driven by the immediate input rather than accumulated memory that might skew the output if misapplied.

In some aspects, a system may receive, from a user device via a user interface, an input indicating a prompt for a language model. The system may transmit a first request to a resource comprising a plurality of language models, where the first request indicates the prompt and a first language model, of the plurality of language models, that is to generate a first output responsive to the prompt. The system may receive a first response indicating the first output. The system may determine a first perplexity value for the first output by comparing a variation in probabilities between different windowed segments of the first output, where the first perplexity value indicates a first degree by which the first output relies on memory of the first language model. The system may transmit a second request to the resource responsive to the first perplexity value indicating an over-reliance on memory by the first language model, where the second request indicates the prompt and a second language model, of the plurality of language models, that is to generate a second output responsive to the prompt. The system may receive a second response indicating the second output, where the second output is different from the first output. The system may determine a second perplexity value for the second output by comparing a variation in probabilities between different windowed segments of the second output, where the second perplexity value indicates a second degree by which the second output relies on memory of the second language model. The system may cause outputting of the second output in the user interface responsive to the second perplexity value not indicating an over-reliance on memory by the second language model.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram for generating relevant language model outputs, in accordance with one or more embodiments.
FIG. 2 shows an illustrative diagram for modifying an output of a language model, in accordance with one or more embodiments.
FIG. 3 shows illustrative components for a system used to generate relevant language model outputs by reducing reliance on memory, in accordance with one or more embodiments.
FIG. 4 shows a flowchart of the steps involved in generating relevant language model outputs by reducing reliance on memory, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

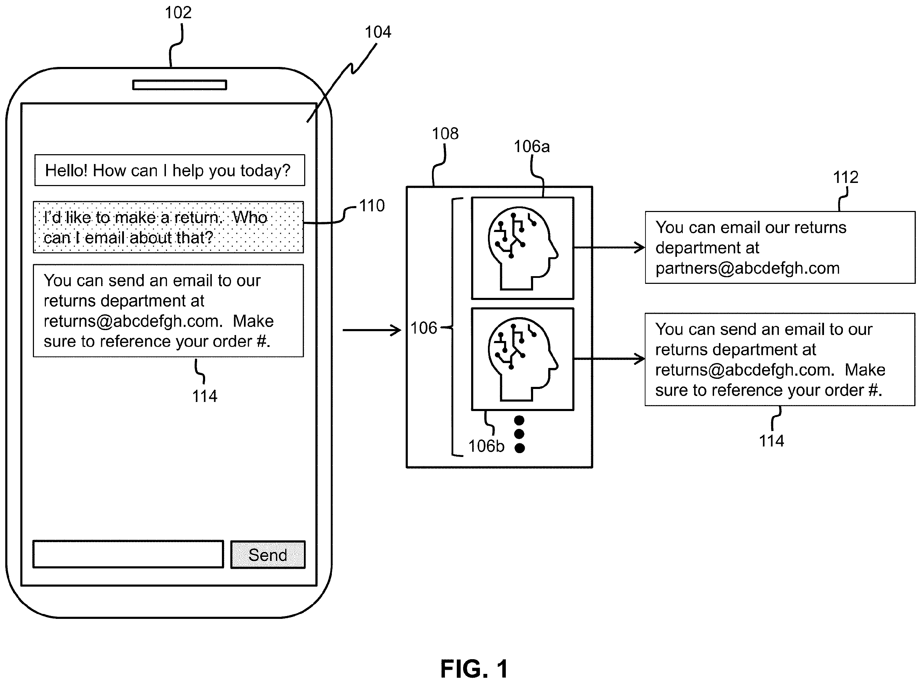

FIG. 1 shows an illustrative diagram for generating relevant language model outputs, in accordance with one or more embodiments. As shown in FIG. 1, a user device 102 may include a user interface 104 that facilitates communication with one or more machine learning language models 106. For example, a language model 106 may be implemented at a resource (e.g., a server, a cloud service, an application, an application programming interface (API) endpoint) of a system 108, and the user interface 104 may facilitate communication to and from the resource. The system 108 may be remote from the user device 102 (e.g., the system 108 may be one or more servers, a cloud computing system, or the like), or the user device 102 may include the system 108. As referred to herein, a "user interface" may comprise a human-computer interaction and communication in a device, and may include display screens, keyboards, a mouse, and the appearance of a desktop. For example, a user interface may comprise a way a user interacts with an application or a website. In some embodiments, the user interface 104 may be a question-answer system, or chatbot, user interface (e.g., the user interface 104 facilitates communication with a language model 106 used for question-answer, or chatbot, functionality). As referred to herein, a "machine learning language model" or "language model" may comprise a computational system designed to understand and generate human language through learning patterns in vast amounts of training data, such as books, websites, and other sources. The trained model may be able to predict and produce coherent and contextually relevant text based on input it receives. In some examples, a language model 106 may include a large language model (LLM), a transformer model, a generative pre-trained transformer (GPT) model, or another type of generative model. While techniques are described herein with reference to language models, the techniques are also applicable to other types of generative models that produce images, videos, or other content, including generative adversarial networks, variational autoencoders, diffusion models, or the like. As referred to herein, "memory" of a language model 106 may comprise information (e.g., embeddings, model layers, attention mechanisms, or the like) stored in the model based on training data.

In some embodiments, the resource of the system 108 may include a plurality of language models 106, which includes at least a first language model 106a and a second language model 106b. The first language model 106a may be different from the second language model 106b. For example, the first language model 106a and the second language model 106b may differ as to their type of model, type of machine learning algorithm, the training data used for training, an amount of training data used for training, or the like. Accordingly, in some examples, the first language model 106a and the second language model 106b may produce different outputs in response to the same input prompt. In some embodiments, communication with the resource (e.g., an API endpoint) may be in the form of requests and responses via an API.

In connection with use of the language model(s) 106 (e.g., a question-answer session, a chat session, or the like), text may be entered into the user interface 104, and the system 108 may obtain (e.g., receive), via the user interface 104, an input indicating a prompt 110 (e.g., the entered text) for a language model 106. The prompt 110 may indicate an instruction (e.g., "provide a summary of the following text"), context (e.g., the text to be summarized), and/or a question ("what is the main takeaway from the text"). In some embodiments, the prompt 110 may be automatically generated (e.g., non-human generated) by another system that interfaces with the system 108. For example, the prompt 110 may be generated by another machine learning model. In some embodiments, the prompt 110 may instruct content summarization.

The system 108 may determine an output responsive to the prompt 110 using a language model 106 (e.g., using retrieval-augmented generation (RAG) that involves performing information retrieval that is used to generate the output). For example, the system 108 (e.g., responsive to receiving the input) may transmit (e.g., using the API) a first request to the resource, and the first request may indicate the prompt 110 and may indicate that the first language model 106a should be used to generate an output responsive to the prompt 110. For example, the first language model 106a may be less robust than the second language model 106b, and therefore may be used in an attempt to respond to the prompt 110 before the second language model 106b is used in order to conserve computing resources. Accordingly, the system 108 may select the first language model 106a for the first request based on the first request being an initial request associated with the prompt 110, or based on the first request following a previous request that used a language model 106 less robust than the first language model 106a (e.g., an increasingly robust language model 106 can be selected for each subsequent request). The first request may cause the prompt 110 to be input to the first language model 106a, and the first language model 106a may generate an output 112 (which can also be referred to as a "first output") responsive to the prompt 110. Accordingly, the system 108 may receive (e.g., using the API) a first response indicating the output 112.

In some embodiments, the system 108 may determine a degree (e.g., a measurement) by which the output 112 relies on memory of the first language model 106a. For example, to determine the degree of reliance on memory, the system 108 may determine a perplexity value for the output 112. "Perplexity" or "perplexity valve" may refer to a measurement of a language model's uncertainty or confusion present in a model output (e.g., a quantification of the model's uncertainty in predicting the next word in a sequence based on preceding words). For example, perturbing a prompt in various dimensions (e.g., abstractness, concreteness, tense, verb complexity, etc.) may produce different outputs, which can be measured respectively for perplexity. Perplexity may be calculated based on a level of surprise of a model about the words it encounters, which may be based on probabilities the model assigns to those words (e.g., an average negative log probability of the model predicting a sequence of words).

For example, the system 108 may determine "perplexity" as a measure of a language model's uncertainty or confusion by assessing how well the model predicts each word in a sequence based on the context provided by previous words. For example, the system 108 may determine the probabilities that a language model assigns to each word in a sequence by leveraging the model's internal mechanism for predicting next words based on prior context. When given a prompt, the model processes it word by word, using its learned probability distribution to predict the likelihood of each possible next word in the sequence. This probability distribution is based on the model's training data, which informs it about common word patterns, syntax, and context-based associations. For each word, the model computes a probability by considering all preceding words, assessing which words are most likely to follow given the context. The model essentially generates a "softmax" layer, which converts its raw predictions into probabilities that sum to one across all possible next words. The probability assigned to the actual next word in the sequence reflects the model's confidence in that word being the most contextually appropriate choice.

For example, the "softmax" layer may transform the raw scores or logits produced by a language model into a set of probabilities that represent the likelihood of each possible next word in the sequence. When the model generates predictions for the next word, it initially assigns a raw score to each word in its vocabulary, indicating the model's preliminary assessment of how likely each word is to follow the current sequence. These raw scores, however, are not in a probability format and do not sum to one, making them difficult to interpret directly in terms of confidence.

To convert these scores into usable probabilities, the system applies the softmax function, which takes each score, exponentiates it, and normalizes it by dividing by the sum of the exponentiated scores for all possible words. This operation ensures that each word is assigned a probability between 0 and 1, with the sum of all probabilities equaling one. The resulting probability distribution highlights the model's level of confidence for each potential next word, with higher probabilities indicating stronger alignment with the prior context.

For example, the actual next word in the sequence, if given a high probability by the softmax layer, reflects the model's confidence that this word is the most contextually appropriate choice. This probabilistic approach allows the system to quantify uncertainty and perplexity by examining the distribution of probabilities over words, providing insights into the model's fluency and coherence in responding to prompts.

Throughout this process, each word in the sequence receives a probability score that signifies the model's certainty about its appearance based on the words that precede it. By tracking these probabilities, the system 108 can quantify the model's confidence and evaluate its uncertainty (or perplexity) in generating coherent responses. This step-by-step calculation of word probabilities allows the system 108 to understand how well the model comprehends and predicts language sequences, forming the basis for tasks like perplexity measurement and response quality assessment.

Perplexity is calculated by evaluating the probabilities that the model assigns to each word in the sequence and averaging these values. Specifically, perplexity can be expressed as the exponentiated average negative log probability across the sequence, capturing the "surprise" of the model when encountering certain words. If the model assigns high probabilities to the words in a sequence, perplexity will be low, indicating confidence and predictability in the output. Conversely, if the model assigns low probabilities to the words, perplexity rises, reflecting greater uncertainty.

The system 108 may also determine how smoothly or naturally the model predicts each part of a sequence by examining the consistency and continuity in the model's probability assignments to each successive word. As the model generates or processes a sequence, it calculates the likelihood of each word appearing next, based on the prior context. If the model assigns high probabilities to words that logically follow from previous words, it suggests a smooth, natural flow in the sequence. This reflects that the model's understanding aligns well with common language patterns, allowing it to produce a coherent response with minimal hesitation or unexpected jumps in context.

To quantify this smoothness, the system 108 may analyze perplexity across the sequence, as low perplexity indicates the model's predictions align closely with expected patterns. Additionally, by monitoring probability distributions at each step, the system can detect any significant drops in word probabilities, which might indicate points of uncertainty or disruption in natural flow. Such disruptions may occur if the model encounters words or structures that do not fit smoothly with prior context. By calculating these probability transitions, the system effectively gauges how naturally the model follows through with each part of the sequence, thereby providing a measure of the model's fluency and coherence in language generation.

This measurement serves as a quantification of how smoothly or naturally the model predicts each part of a sequence, with high perplexity suggesting the model is "confused" or uncertain about the output. By calculating perplexity, the system 108 gains insight into the confidence level of the language model's predictions, which can help determine the reliability of responses generated for a given prompt.

When the system 108 detects high uncertainty or confusion in a language model's output, as indicated by elevated perplexity, it can adjust the output by experimenting with variations in the input prompt. This process, known as prompt perturbation, involves making controlled adjustments to the prompt along specific dimensions, such as altering abstractness or concreteness, changing verb tense, simplifying or complicating sentence structure, or modifying verb complexity. Each modified prompt is then processed by the language model, generating different outputs that can be evaluated for perplexity. By comparing the perplexity values of these outputs, the system identifies the version that yields the lowest perplexity, signaling a more confident and coherent response from the model. Through this iterative process, the system 108 can refine the prompt to achieve an output that is not only more aligned with the intended context but also has a reduced reliance on the model's memory, improving overall response reliability. Additionally, this method allows the system to tailor responses to a level of specificity or generality that matches the user's needs, balancing between clear, prompt-driven accuracy and rich contextual understanding.

If the degree of reliance on memory does not indicate an over-reliance on memory (e.g., the output 112 has a probability of being accurate and relevant to the prompt 110), then the system 108 may cause outputting of the output 112 to the user interface 104. Otherwise, if the degree of reliance on memory indicates an over-reliance on memory, then it may indicate that the output 112 contains inaccuracies or irrelevant information. Accordingly, the system 108 may generate a modified output 114 (also referred to herein as a "second output") to be used instead of the output 112. As referred to herein, an "over-reliance on memory" may be indicated by a measurement indicative of a degree of reliance on memory (e.g., a perplexity value) falling in a particular range, satisfying a threshold, having a particular relationship to a baseline or benchmark measurement, or the like.

In some embodiments, responsive to the perplexity value associated with the output 112 indicating an over-reliance on memory by the first language model 106a, the system 108 may transmit (e.g., using the API) a second request to the resource, and the second request may indicate the prompt 110 and may indicate that the second language model 106b should be used to generate an output responsive to the prompt 110. For example, the second language model 106b may be more robust than the first language model 106a, and therefore may have a greater probability of producing an accurate and relevant output. The second request may cause the prompt 110 to be input to the second language model 106b, and the second language model 106b may generate the modified output 114 responsive to the prompt 110 (e.g., the modified output 114 may be different from the output 112). Accordingly, the system 108 may receive (e.g., using the API) a second response indicating the modified output 114.

Again, the system 108 may determine a perplexity value of the modified output 114 (e.g., indicating a degree by which the modified output 114 relies on memory of the second language model 106b) in a similar manner as described above. Due to the use of the second language model 106b, the perplexity value for the modified output 114 may not indicate an over-reliance on memory by the second language model 106b. Accordingly, responsive to the perplexity value for the modified output 114 not indicating an over-reliance on memory by the second language model 106b, the system 108 may cause outputting of the modified output 114 to the user interface 104. In this way, the information ultimately output in the user interface 104 has less reliance on memory and therefore a higher probability of greater accuracy and relevance.

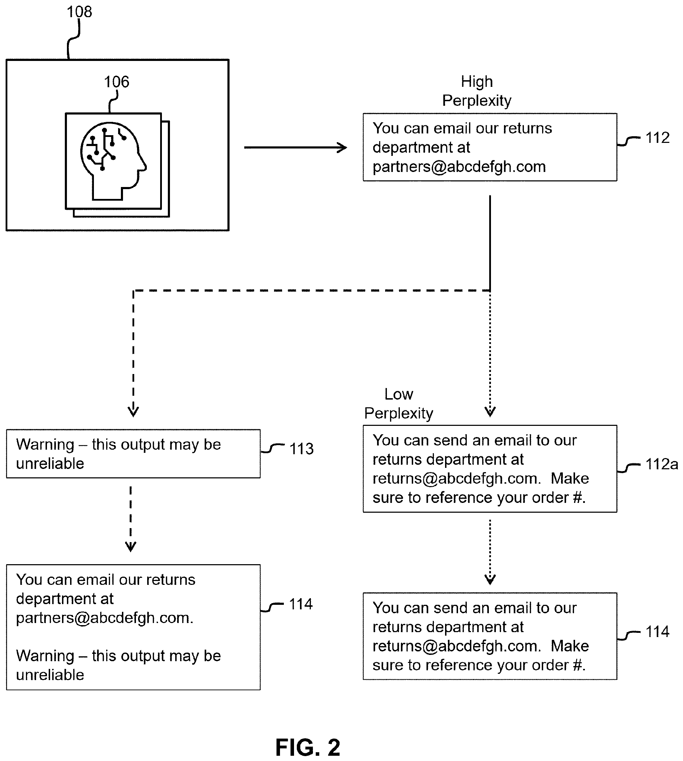

FIG. 2 shows an illustrative diagram for modifying an output of a language model, in accordance with one or more embodiments. As described in connection with Fig. 1, the system 108 may determine a degree by which an output 112 of a language model 106 relies on memory of the language model 106, and may output (e.g., transmit) a modified output 114 if the degree of reliance indicates an over-reliance on memory. In some embodiments, to determine the degree of reliance, the system 108 may determine a perplexity value for the output 112 by comparing a variation in probabilities between different windowed segments of the output 112 (e.g., the perplexity of the output 112 may be based on the consistency of the output 112 across the windowed segments). A "probability" of a word in a sequence may be based on the training of the language model (e.g., a frequency and context with which the word appears with other words or phrases in a training dataset).

In some embodiments, the perplexity value may indicate that the output 112 over-relies on memory if the perplexity value satisfies a threshold (e.g., a high perplexity value may indicate that the output 112 over-relies on memory). The threshold may be based on a baseline perplexity value for the language model 106 (e.g., a maximum baseline perplexity value, a minimum baseline perplexity value, an average baseline perplexity value, a baseline value based on variance or standard deviation, etc.), among other examples. In some embodiments, the perplexity value may indicate that the output 112 over-relies on memory if a difference between the perplexity value and the baseline perplexity value satisfies a threshold. In some embodiments, the system 108 may detect a hallucination of the language model 106 based on the output 112 over-relying on memory. In some embodiments, based on the perplexity value, the system 108 may determine a performance metric for the language model 106, determine a score or other metric for the effectiveness of the prompt 110, and/or determine one or more recommendations to adjust the prompt 110 to reduce reliance on memory.

The baseline perplexity value of the language model 106 may be a level of perplexity based on the training set of the language model 106. Thus, if the language model 106 is relying on training, the perplexity value of different model outputs will remain consistent (e.g., the same or nearly the same) with each other and with the baseline perplexity value. However, if the language model 106 is relying on an input prompt and not memory, the perplexity value of different model outputs will differ from each other and from the baseline perplexity value. For example, the perplexity values across multiple sequences of prompt-response pairs may vary, and the variation verses the baseline perplexity has a relationship to variations in the inputs of the prompt-response pairs.

The baseline perplexity value of the language model 106 may be established using a conditioned dataset (e.g., a set of prompts, each including an instruction and a question without context) having a known difficulty of perturbation (e.g., a known perplexity). For example, the system 108 may cause the dataset conditioned with perturbations to be input to the language model 106 to produce a plurality of outputs of the language model 106, and the system 108 may determine the baseline perplexity value(s) for the language model 106 based on differences in perplexity values across the plurality of outputs (e.g., the delta of the model perplexity from the quantified perturbations). In some embodiments, the baseline perplexity value(s) may be specific to a particular type of input and/or a particular set of model conditions.

The system 108 can train a language model using a baseline perplexity value established with a conditioned dataset, which typically consists of prompts designed with a controlled structure, such as an instruction and a question without additional context. This dataset is crafted to represent a known level of difficulty, meaning that the model's responses to these prompts have predictable perplexity values. By setting a baseline perplexity, the system 108 establishes a reference point for the model's performance on standard inputs, helping quantify its uncertainty under typical conditions.

During training, the system 108 uses this baseline to measure how the model responds to various prompts, observing how perplexity fluctuates in relation to different prompt features or perturbations. If the model's perplexity deviates significantly from the baseline on prompts of similar structure or known complexity, it signals to the system 108 that the model may be over-relying on memory or lacks robustness in generalizing. Through iterative adjustments, such as refining the model's training data, tuning hyperparameters, or enhancing prompt conditioning, the system fine-tunes the model to align its perplexity responses closer to the baseline. This training process ensures that the model can maintain consistent performance and confidence across different levels of input complexity, enabling it to handle real-world queries with improved stability and reduced uncertainty.

During training, the language model may utilize large and diverse datasets composed of text from a wide range of sources to learn language patterns, semantics, and context-based reasoning. This data often includes books, articles, websites, conversational text, and other structured and unstructured text corpora that provide examples of language use across different domains, styles, and complexities. The diversity of the data ensures that the model is exposed to various sentence structures, vocabulary, idioms, and topics, which helps it learn to generalize and respond effectively across contexts.

In addition to broad text corpora, specialized datasets may be incorporated to teach the model specific tasks or domain knowledge, such as medical terminology, legal language, or technical documentation. Furthermore, labeled datasets are sometimes used to enhance the model's ability to follow specific instructions, understand questions, or perform tasks like summarization and translation. During training, the model processes this data to learn probability distributions over words and phrases, refining its ability to predict sequences based on previous context. This comprehensive data exposure enables the model to produce coherent, contextually relevant, and diverse outputs that mimic natural language understanding.

In some embodiments, the degree by which the output 112 relies on memory of the language model 106 may be based on a level perplexity of the prompt 110 (i.e., the input) and a level of perplexity of the output 112. For example, the system 108 may determine a first perplexity value (e.g., one or more first perplexity values) for the prompt 110, and a second perplexity value (e.g., one or more second perplexity values) for the output 112. Continuing with the example, the system 108 may compare the first perplexity value and the second perplexity value (e.g., to ascertain an amount of variation between the first perplexity value and the second perplexity value). Thus, the degree by which the output 112 relies on memory may be based on a variation between the first perplexity value and the second perplexity value (e.g., with more variation indicating higher memory usage and less variation indicating lower memory usage). Accordingly, the variation in perplexity values may indicate that the output 112 over-relies on memory if the amount of variation satisfies a threshold.

As described herein, after determining that the output 112 over-relies on memory of the language model 106, the system 108 may output (e.g., transmit) a modified output 114. For example, the system 108 may modify the output 112 to obtain the modified output 114. In some embodiments, the output 112 may be discarded and the modified output 114 may not include the output 112. For example, as described in connection with FIG. 1, the system 108 may determine the modified output 114, responsive to the prompt 110, using a different language model 106 than the language model 106 used to determine the output 114.

In some embodiments, the modified output 114 may include the output 112 and additional text 113 (as shown in the left branch of Fig. 2). For example, the additional text may be first text or second text based on the degree by which the output 112 relies on memory (e.g., the first text may be added to the output 112 if the perplexity value falls in a first range or differs from the baseline perplexity value by more than a first amount, and the second text may be added to the output 112 if the perplexity value falls in a second range or differs from the baseline perplexity value by more than a second amount). In some examples, the modified output 114 may be transmitted by the system 108 to a backend system or database for diagnostic or retraining use. Here, the modified output 114 may include (e.g., in addition to the prompt 110 and/or the output 112) an indication that the language model 106 is over-relying on memory and/or may include the perplexity value for use in retraining the language model 106. In some embodiments, the modified output 114 may be output to the user interface 104. For example, the modified output 114 (e.g., in addition to the output 112) may include an indication that the output 112 has a potential to be unreliable, or an indication that the prompt 110 should be modified (e.g., rewritten), among other examples.

In some embodiments, the system 108 may determine multiple output options, responsive to the prompt 110, using the language model 106 and/or one or more additional language models 106. For example, the system 108 may determine the output 112 and at least one additional output 112a responsive to the prompt 110 (e.g., using the same language model 106 or different language models 106). In the case of the multiple outputs being generated by the same language model 106, the system 108 may append to the prompt 110 an instruction to generate multiple different outputs. For each of the output options (e.g., the output 112 and the additional output(s) 112a), the system 108 may determine respective degrees by which the output options rely on memory of the language model(s) 106 (e.g., using perplexity values, in a similar manner as described herein). The system 108 then may select for outputting the output option associated with the lowest degree of reliance on memory. For example, if the degree of memory reliance of the additional output 112a is less than the degree of memory reliance of the output 112, then the system 108 may use the additional output 112a as the modified output 114 (as shown in the right branch of Fig. 2).

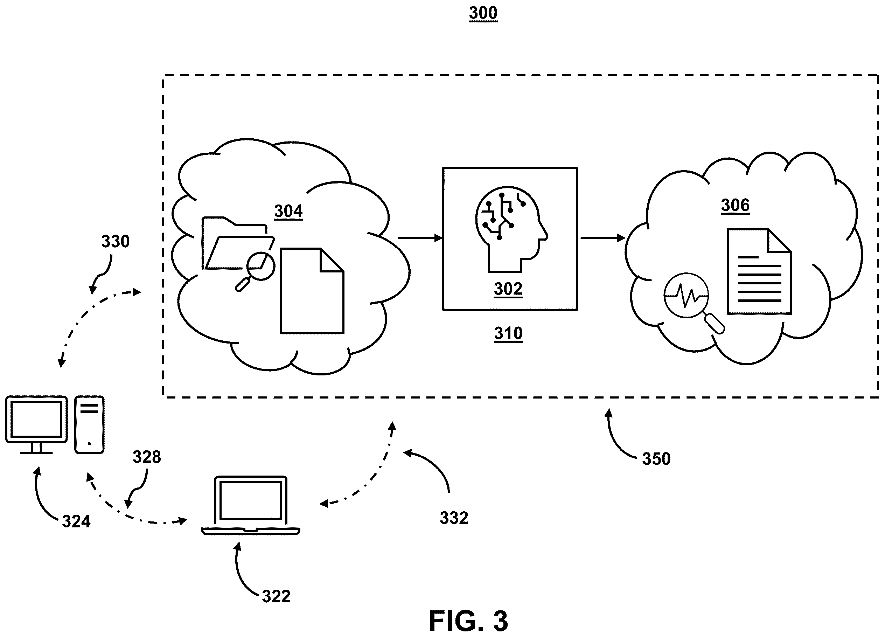

FIG. 3 shows illustrative components for a system used to reduce memory reliance by a language model, in accordance with one or more embodiments. For example, FIG. 3 may show illustrative components for modification of the output of a language model if the degree of reliance on memory indicates an over-reliance on memory. As shown in FIG. 3, system 300 may include mobile device 322 and user terminal 324. While shown as a laptop computer and personal computer, respectively, in FIG. 3, it should be noted that mobile device 322 and user terminal 324 may be any computing device, including, but not limited to, a smartphone, a tablet computer, a hand-held computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include the system 108. In some examples, cloud components 310 may access one or more databases or document sets used for RAG. Cloud components 310 may include model 302, which may be a machine learning model, artificial intelligence model, etc. (which may be referred collectively as "models" herein). Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., contextually relevant text, such as modified outputs for a language model).

In a variety of embodiments, model 302 may update its configurations (e.g., weights, biases, or other parameters) based on the assessment of its prediction (e.g., outputs 306) and reference feedback information (e.g., user indication of accuracy, reference labels, perplexity values, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., a degree of reliance on memory).

In some embodiments, the model (e.g., model 302) may automatically perform actions based on outputs 306. In some embodiments, the model (e.g., model 302) may not perform any actions. The output of the model (e.g., model 302) may be used to further update the model by generating updated training data, including a prompt and a modified output.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

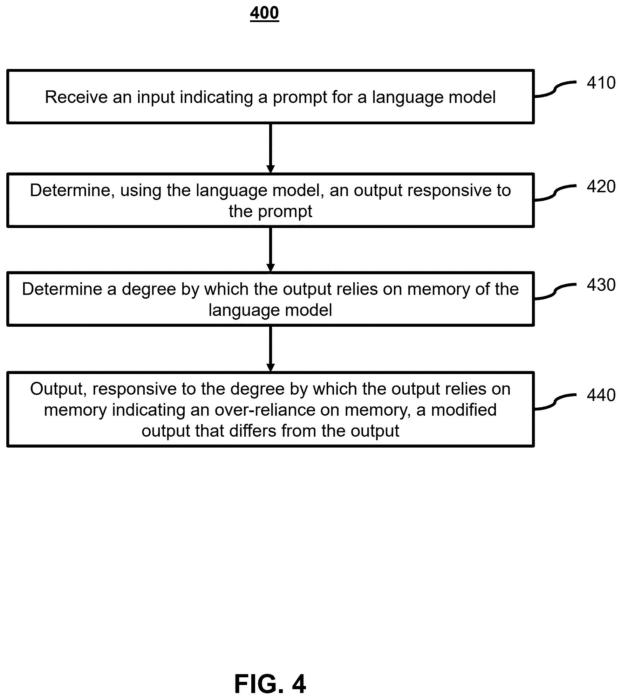

FIG. 4 shows a flowchart of the steps involved in reducing memory reliance by a language model, in accordance with one or more embodiments. For example, the system 108 may use process 400 (e.g., as implemented on one or more system components described above) in order to generate relevant outputs by a machine learning language model.

At step 410, process 400 may include (e.g., using one or more components described above) receiving an input indicating a prompt for a language model. For example, as described herein, the system 108 may obtain (e.g., receive), via the user interface 104, an input indicating a prompt 110 (e.g., entered text) for a language model 106. As one example, the system may receive an input indicating a prompt for a language model through a user interface that facilitates direct interaction between the user and the model. For instance, the system (e.g., system 108 (FIG. 1)), may capture and interpret user-entered text through an interface component (e.g., user interface 104 (FIG. 1)) designed to collect and manage inputs. The user interface can take various forms, such as a text box in a web application, a command-line interface, or a conversational agent window, allowing users to input queries or prompts. When the user enters text into this interface, the system detects it as a prompt (e.g., prompt 110 (FIG. 1)), and then processes this data for use by the language model (e.g., language model 106 (FIG. 1)). This setup ensures that the model receives clear, structured prompts directly from the user, facilitating accurate and timely responses based on the entered text.

At step 420, process 400 may include (e.g., using one or more components described above) determining, using the language model, an output responsive to the prompt. For example, as described herein, the system 108 (e.g., responsive to receiving the input) may transmit (e.g., using an API) a request to a resource that includes the language model 106. In some examples, the request may indicate the prompt 110 and may specify the language model 106 that should be used to generate an output responsive to the prompt 110. In some embodiments, determining the output responsive to the prompt may include determining the output responsive to the prompt using RAG. For example, using RAG, the system 108 may retrieve (e.g., via an API request and response) information from one or more data sources (e.g., databases, text corpora, or the like), and may use the information to determine the output. For example, the system may retrieve information from one or more designated data sources, such as databases or text corpora, that may contain valuable context related to the prompt. By incorporating these retrieved data points, the language model can generate a response that is both contextually accurate and rich in detail, ensuring the output is not solely based on the model's internal knowledge but is instead augmented by current and relevant external information. This approach allows the system to deliver more reliable and informed responses tailored to the specifics of the prompt.

At step 430, process 400 may include (e.g., using one or more components described above) determining a degree by which the output relies on memory of the language model. For example, as described herein, to determine the degree of reliance on memory, the system 108 may determine a perplexity value for the output 112. As an example, determining the degree by which the output relies on memory may include comparing a variation in probabilities between different windowed segments of the output, and determining a perplexity value for the output based on comparing the variation in the probabilities between the different windowed segments of the output. Additionally, or alternatively, determining the degree by which the output relies on memory may include determining a perplexity value for the output, comparing the perplexity value to a threshold, and determining that the output over-relies on memory based on comparing the perplexity value to the threshold.

For example, to determine the degree of reliance on memory in a language model's output, a system can evaluate perplexity values, which measure how confidently the model predicts each word in the output. One method involves analyzing the variation in predicted probabilities across different windowed segments of the output. By comparing how probability distributions fluctuate between these segments, the system can derive a perplexity score that reflects the consistency and context relevance in the model's predictions. High variability in probabilities across segments may indicate that the model is relying more heavily on its memory rather than the immediate prompt context, leading to a higher perplexity value. Additionally, or as an alternative approach, the system could compute an overall perplexity score for the entire output and then compare this score to a pre-defined threshold. If the perplexity value surpasses the threshold, it suggests that the output might be overly influenced by the model's memory, rather than directly shaped by the input prompt. This approach enables the system to quantify and assess the model's memory reliance, helping to manage and, if necessary, reduce reliance on memory for improved response accuracy.

In some embodiments, process 400 may include determining a baseline perplexity value for the language model, and determining the threshold based on the baseline perplexity value. In connection with determining the baseline perplexity value, process 400 may include causing a dataset conditioned with perturbations to be input to the language model to produce a plurality of outputs of the language model, and determining a baseline perplexity value for the language model based on differences in perplexity values across the plurality of outputs. Accordingly, determining the degree by which the output relies on memory may include determining a perplexity value for the output, comparing a difference between the perplexity value and the baseline perplexity value to a threshold, and determining that the output over-relies on memory based on comparing the difference to the threshold. In some embodiments, determining the degree by which the output relies on memory may include determining a first perplexity value for the prompt, and a second perplexity value for the output, comparing the first perplexity value to the second perplexity value, and determining that the output over-relies on memory based on comparing the first perplexity value and the second perplexity value.

At step 440, process 400 may include (e.g., using one or more components described above) outputting, responsive to the degree by which the output relies on memory indicating an over-reliance on memory, a modified output that differs from the output. For example, as described herein, the system 108 may generate a modified output 114 to be used instead of the output 112. In some embodiments, process 400 may include modifying the output to obtain the modified output that includes the output and additional text. The additional text of the modified output may include an indication that the output has a potential to be unreliable. Additionally, or alternatively, the additional text of the modified output may include an indication that the prompt should be modified. In some embodiments, process 400 may include determining first text or second text for the additional text based on the degree by which the output relies on memory. For example, if the degree is a first, higher degree (e.g., a perplexity value in a first range or satisfying a first threshold), then the system 108 may determine the additional text to be the indication that the prompt should be modified, whereas if the degree is a second, lower degree (e.g., a perplexity value in a second range or satisfying a second threshold), then the system 108 may determine the additional text to be the indication that the output has the potential to be unreliable. In some examples, the modified output includes an indication that the language model is over-relying on memory, the modified output includes the perplexity value for retraining the language model, and/or the modified output includes an indication that the prompt should be modified.

For example, when the system detects that an output overly relies on memory, indicating a potential for unreliability, it can produce a modified output to improve clarity and trustworthiness. This modified output might retain the original response but include additional text that informs the user of the elevated memory reliance. For instance, the system could append a cautionary note suggesting that the output may be less reliable and encourage the user to modify their prompt for a more contextually accurate response. This added guidance helps users understand the potential limitations of the response and provides actionable feedback to refine their prompt if needed. Alternatively, the system may generate a modified output that diverges from the original by integrating more prompt-focused information, drawing on supplementary data sources, or emphasizing context directly from the input prompt to reduce memory reliance. By providing this tailored feedback or altered output, the system enhances user experience and response accuracy, empowering users to receive more prompt-driven and dependable outputs.

In some embodiments, outputting the modified output may include determining, using a different language model, the modified output responsive to the prompt. In some embodiments, process 400 may include determining, using the language model or a different language model, an additional output responsive to the prompt, determining a different degree by which the additional output relies on memory of the language model (e.g., where the different degree is less than the degree), and determining the modified output based on the additional output.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for generating relevant language model outputs by reducing reliance on memory.
2. The method of embodiment 1 comprising receiving, by a device, an input indicating a prompt for a language model; determining, by the device and using the language model, an output responsive to the prompt; determining, by the device, a degree by which the output relies on memory of the language model; and outputting, by the device and responsive to the degree by which the output relies on memory indicating an over-reliance on memory, a modified output that differs from the output.
3. The method of embodiment 2, wherein determining the degree by which the output relies on memory comprises: determining a perplexity value for the output.
4. The method of any of embodiments 2-3, wherein determining the degree by which the output relies on memory comprises: comparing a variation in probabilities between different windowed segments of the output; and determining a perplexity value for the output based on comparing the variation in the probabilities between the different windowed segments of the output.
5. The method of any of embodiments 2-4, wherein determining the degree by which the output relies on memory comprises: determining a perplexity value for the output; comparing the perplexity value to a threshold; and determining that the output over-relies on memory based on comparing the perplexity value to the threshold.
6. The method of embodiment 5, further comprising: determining a baseline perplexity value for the language model; and determining the threshold based on the baseline perplexity value.
7. The method of any of embodiments 2-6, further comprising: causing a dataset conditioned with perturbations to be input to the language model to produce a plurality of outputs of the language model; and determining a baseline perplexity value for the language model based on differences in perplexity values across the plurality of outputs, wherein determining the degree by which the output relies on memory comprises: determining a perplexity value for the output; comparing a difference between the perplexity value and the baseline perplexity value to a threshold; and determining that the output over-relies on memory based on comparing the difference to the threshold.
8. The method of any of embodiments 2-7, wherein determining the degree by which the output relies on memory comprises: determining a first perplexity value for the prompt, and a second perplexity value for the output; comparing the first perplexity value to the second perplexity value; and determining that the output over-relies on memory based on comparing the first perplexity value and the second perplexity value.
9. The method of any of embodiments 2-8, further comprising: modifying the output to obtain the modified output that comprises the output and additional text.
10. The method of embodiment 9, further comprising: determining first text or second text for the additional text based on the degree by which the output relies on memory.
11. The method of any of embodiments 2-10, wherein outputting the modified output comprises outputting an indication that the output has a potential to be unreliable.
12. The method of any of embodiments 2-11, wherein outputting the modified output comprises outputting an indication that the prompt should be modified.
13. The method of any of embodiments 2-12, wherein outputting the modified output comprises: determining, using a different language model, the modified output responsive to the prompt.
14. The method of any of embodiments 2-13, wherein determining the output responsive to the prompt comprises: determining the output responsive to the prompt using retrieval-augmented generation.
15. The method of any of embodiments 2-14, further comprising: determining, by the device and using the language model or a different language model, an additional output responsive to the prompt; determining, by the device, a different degree by which the additional output relies on memory of the language model, wherein the different degree is less than the degree; and determining the modified output based on the additional output.
16. The method of any of embodiments 2-15 wherein outputting the modified output comprises transmitting at least one of: an indication that the language model is over-relying on memory, the perplexity value for retraining the language model, or an indication that the prompt should be modified.
17. One or more non-transitory, computer-readable mediums storing instructions that, when executed by a data processing apparatus, cause the data processing apparatus to perform operations comprising those of any of embodiments 1-16.
18. A system comprising one or more processors; and memory storing instructions that, when executed by the processors, cause the processors to effectuate operations comprising those of any of embodiments 1-16.
19. A system comprising means for performing any of embodiments 1-16.

## Claims

1. A system for generating relevant language model outputs by reducing reliance on memory, the system comprising:
one or more memories; and
one or more processors, communicatively coupled to the one or more memories, configured to:
receive, from a user device via a user interface, an input indicating a prompt for a language model;
transmit a first request to a resource comprising a plurality of language models,
wherein the first request indicates the prompt and a first language model, of the plurality of language models, that is to generate a first output responsive to the prompt;
receive a first response indicating the first output;
determine a first perplexity value for the first output by comparing a variation in probabilities between different windowed segments of the first output,
wherein the first perplexity value indicates a first degree by which the first output relies on memory of the first language model;
transmit a second request to the resource responsive to the first perplexity value indicating an over-reliance on memory by the first language model,
wherein the second request indicates the prompt and a second language model, of the plurality of language models, that is to generate a second output responsive to the prompt;
receive a second response indicating the second output,
wherein the second output is different from the first output;
determine a second perplexity value for the second output by comparing a variation in probabilities between different windowed segments of the second output,
wherein the second perplexity value indicates a second degree by which the second output relies on memory of the second language model; and
cause outputting of the second output in the user interface responsive to the second perplexity value not indicating an over-reliance on memory by the second language model.

2. A method for generating relevant language model outputs by reducing reliance on memory, the method comprising:
receiving, by a device, an input indicating a prompt for a language model;
determining, by the device and using the language model, an output responsive to the prompt;
determining, by the device, a degree by which the output relies on memory of the language model; and
outputting, by the device and responsive to the degree by which the output relies on memory indicating an over-reliance on memory, a modified output that differs from the output.

3. The method of claim 2, wherein determining the degree by which the output relies on memory comprises one of:
(a) determining a perplexity value for the output; and
(b) comparing a variation in probabilities between different windowed segments of the output, and determining a perplexity value for the output based on comparing the variation in the probabilities between the different windowed segments of the output.

4. The method of claim 2 or 3, wherein determining the degree by which the output relies on memory comprises:
determining a perplexity value for the output;
comparing the perplexity value to a threshold; and
determining that the output over-relies on memory based on comparing the perplexity value to the threshold;
wherein, optionally, the method further comprises: determining a baseline perplexity value for the language model, and determining the threshold based on the baseline perplexity value.

5. The method of any one of claims 2 to 4, further comprising:
causing a dataset conditioned with perturbations to be input to the language model to produce a plurality of outputs of the language model; and
determining a baseline perplexity value for the language model based on differences in perplexity values across the plurality of outputs,
wherein determining the degree by which the output relies on memory comprises:
determining a perplexity value for the output;
comparing a difference between the perplexity value and the baseline perplexity value to a threshold; and
determining that the output over-relies on memory based on comparing the difference to the threshold.

6. The method of any one of claims 2 to 5, wherein determining the degree by which the output relies on memory comprises:
determining a first perplexity value for the prompt, and a second perplexity value for the output;
comparing the first perplexity value to the second perplexity value; and
determining that the output over-relies on memory based on comparing the first perplexity value and the second perplexity value.

7. The method of any one of claims 2 to 6, further comprising:
modifying the output to obtain the modified output that comprises the output and additional text;
wherein, optionally, then method further comprises: determining first text or second text for the additional text based on the degree by which the output relies on memory.

8. The method of any one of claims 2 to 7, wherein outputting the modified output comprises one or more of:
(a) outputting an indication that the output has a potential to be unreliable;
(b) outputting an indication that the prompt should be modified; and
(c) determining, using a different language model, the modified output responsive to the prompt.

9. The method of any one of claims 2 to 8, wherein determining the output responsive to the prompt comprises:
determining the output responsive to the prompt using retrieval-augmented generation.

10. The method of any one of claims 2 to 9, further comprising:
determining, by the device and using the language model or a different language model, an additional output responsive to the prompt;
determining, by the device, a different degree by which the additional output relies on memory of the language model, wherein the different degree is less than the degree; and
determining the modified output based on the additional output.

11. A non-transitory, computer-readable medium, comprising instructions for generating relevant language model outputs by reducing reliance on memory that, when executed by one or more processors, cause operations comprising:
receiving, by a device, an input indicating a prompt for a language model;
generating, by the device and using the language model, an output responsive to the prompt;
determining, by the device, a perplexity value for the output,
wherein the perplexity value indicates a degree by which the output relies on memory of the language model; and
transmitting, by the device and responsive to the perplexity value satisfying a first threshold or a difference between the perplexity value and a baseline perplexity value satisfying a second threshold, a modified output that differs from the output.

12. The non-transitory, computer-readable medium of claim 11, wherein determining the perplexity value for the output comprises:
comparing a variation in probabilities between different windowed segments of the output; and
determining the perplexity value for the output based on comparing the variation in the probabilities between the different windowed segments of the output.

13. The non-transitory, computer-readable medium of claim 11 or 12, wherein transmitting the modified output comprises, transmitting at least one of:
an indication that the language model is over-relying on memory,
the perplexity value for retraining the language model, or
an indication that the prompt should be modified.

14. The non-transitory, computer-readable medium of any one of claims 11 to 13, wherein the instructions further cause operations comprising:
causing a dataset conditioned with perturbations to be input to the language model to produce a plurality of outputs of the language model; and
determining the baseline perplexity value for the language model based on differences in perplexity values across the plurality of outputs.

15. The non-transitory, computer-readable medium of any one of claims 11 to 14, wherein the instructions further cause operations comprising:
determining, using a different language model, the modified output responsive to the prompt.
